# EUROPEAN PATENT SPECIFICATION

(11) **EP 1 522 032 B1**
(45) Date of publication and mention of the grant of the patent: **18.07.2007**
(21) Application number: 03789072.0
(22) Date of filing: 24.11.2003
(51) Int. Cl.: G06F 17/30

(54) **AVOIDING DATA LOSS WHEN REFRESHING A DATA WAREHOUSE**
VERMEIDEN VON DATENVERLUSTEN BEIM AKTUALISIEREN EINES DATA WAREHOUSE
EVITER UNE PERTE DE DONNEES LORS DU RAFRAICHISSEMENT D'UN ENTREPOT DE DONNEES

(30) Priority: 27.11.2002 US 429372 P; 27.11.2002 US 429373 P; 27.11.2002 US 429371 P; 27.11.2002 US 429374 P
(43) Date of publication of application: 13.04.2005
(73) Proprietor: SAP AG, 69190 Walldorf (DE)
(72) Inventor: CONRAD, Michael, 68799 Reilingen (DE); HENRICH, Dirk, 55127 Mainz (DE)
(86) International application number: PCT/EP2003/013158
(87) International publication number: WO 2004/049202

(56) References cited:
- US-A- 6 029 178
- US-A- 6 032 158
- RAM P ET AL: "Extracting delta for incremental data warehouse maintenance" DATA ENGINEERING, 2000. PROCEEDINGS. 16TH INTERNATIONAL CONFERENCE ON SAN DIEGO, CA, USA 29 FEB.-3 MARCH 2000, LOS ALAMITOS, CA, USA,IEEE COMPUT. SOC, US, 29 February 2000 (2000-02-29), pages 220-229, XP010378715 ISBN: 0-7695-0506-6
- STEFANI H: "Datenarchivierung mit SAP" SAP-INFO, SAP AG, CORPORATE COMMUNICATIONS, WALLDORF, DE, May 2002 (2002-05), XP002266517 ISSN: 1430-5526
- CHAUDHURI S ET AL: "An overview of data warehousing and OLAP technology" SIGMOD RECORD, ASSOCIATION FOR COMPUTING MACHINERY, NEW YORK, US, vol. 26, no. 1, March 1997 (1997-03), pages 65-74, XP002115173

## Description

### Background of the Invention

### Field of the Invention

The technical field of this invention is in the area of electronic data processing. More particularly, the invention relates to methods, computer program products and systems for replicating data objects.

### Description of the Related Art

The replication of data objects is well known to every user of a computer and is a standard procedure, which is routinely applied. A special application of replicating data objects is the copying or the archiving process, by which data objects are copied from a source system to a target system for safety and/or performance reasons (e.g. Stefani, H.: "Datenarchivierung mit SAP" SAP-Info, SAP AG, Corporate Communications, Walldorf, DE, May 2002, XP0022666517 ISSN: 1430-5526). In these special applications, the data objects remain unchanged. However, the more general term "replication" comprises also such processes, in which the data objects are changed during the replication process. Such changes may be a consequence of the need to concentrate the amount of data or of the wish of the user of the target system to receive only a,particular part of the data object. In enterprises, so called enterprise resource planning software (ERP) applications are used to control business processes and to manage company information of enterprises of various kinds in any field of technology by means of automatic data processing systems such as computers or computer systems. During the use of such software, a huge amount data is usually created, which contains important business information contained in data objects. In such an environment a source system may be the computer and software system of the financial and or controlling department and the target system may be the computer and software system of the management. In order to keep the management informed about the economic situation in the enterprise, financial data, e.g. the posting data may be replicated (transferred under changes such as aggregations or concentrations or copied) from the financial system to the management system (e.g. Chaudhuri, S. et al: "An overview of data warehousing and OLAP technology" Sigmod Record, Association for Computing Machinery, New York, US, vol. 26, no. 1, March 1997, pp 65-74; US 6,032,158 A; US 6,029,178). In many ERP applications, the transactions of the enterprise are stored in the computer system independently and at any time. At the same time, there is a need to provide one or more target systems with replicated data. These data replications usually take place less frequently, and in order to reduce the amount of the transferred data volume, only data objects which are new or amended since the previous replication process should be replicated. One method to reach this goal is the time stamp process (e.g. Ramp P. et al: "Extracting delta for incremental data warehouse maintenance", data engineering, 2000, Proc. Conf. 16th international conference on San Diego, CA, USA 29 Feb - 3 March 2000, Los Alamitos, CA, USA, IEEE Comput. Soc, 29 Feb 2000, pages 220-229, ISBN 0.7695-0506-6). In this method, a time stamp is assigned to the data object to be stored in the source system. The time stamp is usually the time at which the data object is stored or a time shortly after the storage process has started. And the replication application - this is a software application, which replicates the data object from the source to the target system - replicates at a particular run only such data objects, the time stamps of which are within a particular, predefinable time interval.

However, this method has the disadvantage that the time stamp is not necessarily identical with time of the actual commit of the data base (application), which physically stores/writes the data object on the physical storage means. This discrepancy may cause failures, particularly missing data objects, in the replication process, if the replication process takes place between at a time between the time stamp and the time of the commit and /or of the storing and replication processes run parallel. Suppose a time stamp tₛ, a commit t_{c}, and a replication interval from t₁ to t₂, where t₁ < tₛ < t₂ < t_{c}. In such a time gap, the particular data object is, due to the lacking commit (t₂ < t_{c}), not yet visible for the replication application and will thus not be replicated. During the next replication run with an interval from t₂ to t₃ the time stamp of that data object is not within the interval because of tₛ < t₂. This problem is usually defused by using a time t₂ + Δt as the upper level of the replication interval and starting the subsequent replication run exactly at t₂. A usual length of Δt is about 30 min. However, this concept with Δt has on the one hand the disadvantage that "historical" data objects are replicated if Δt is too large and on the other hand that data objects are lost, if Δt is too small. Further, assigning a time stamp is an access on a central resource of the computer and disturbs the parallel storing of the data objects.

Thus, there is a need for a method, software application and/or data processing system providing a more efficient solution of at least parts of the problems described above, particularly it is desirable to provide a software application having a mechanism for identifying the data objects to be replicated.

### Summary of the Invention

In accordance with the invention, as embodied and broadly described herein, methods and systems consistent with the principles of the invention provide a computer-implemented method for processing one or more data objects in a source computer system and replicating the one or more data objects to a target computer system, comprising online transaction processes performing amending, deleting, changing or inserting operations on the one or more data objects and replication processes replicating the thus operated one or more data objects,
characterized by
- using one or more data elements, which allow an identification of a data object or a set of data objects to be processed and which can be set to three possible states, a first state, in which a data element can be accessed by one or more of the online transaction processes and in which this data element is assignable to one or more of the data objects,
   a second state, in which a data element can not be accessed by the online transaction processes but is still assignable to one or more of the data objects by said one or more online transaction processes having already accessed the data element at a time in which it has been in the first state, and
   a third state, in which a data element can not be accessed by the online transaction processes and is not assignable to the one or more data objects,whereby one of the one or more data elements is definable as a default data element,
- defining a data element as the default data element and
- a) setting the default data element to the first state,
- performing by means of the online transaction processes the amending, deleting changing or inserting operations on the one or more data objects,
- b) checking by means of the online transaction processes one or more of the data elements, whether a default data element is accessible, and if yes, assigning that data element to the one or more data objects,
- storing by means of the online transaction processes the one or more data objects having that data element assigned on the source computer system,
- c) changing, after commit of the storing processes of all data objects having that data element assigned, the state of the data element to the third state and
- replicating by means of the replicating processes such data objects to the target computer system, which have a data element(106, 200) of the third state assigned
- changing the state of the data element from the first state to the second state if another data element is defined as the default data element.

By using the inventive electronic data element described above in data processing, software applications, which require access to data objects for data processing, storing or replication purpose, can check by querying the electronic data element and its state, what operations on the on the electronic data element and/or the data objects are allowed or not allowed, particularly whether the data objects having that electronic data element assigned are ready for the replication process. If they are, such data objects may be replicated from their source system to a target system. Further, it is assured that no further data objects can be assigned to that particular electronic data element. Thus, no data object can be omitted by the replication process.

Electronic data elements, which are set in the second state, can no longer be selected by data processing processes in order to assign them to the processed data objects. However, electronic data elements already selected before they have been set to the second state can still be assigned to the processed data objects.

The invention is further directed to data structures having electronic data elements, to computer systems, computer programs, computer readable media and carrier signals comprising instructions for processing data according to the inventive method and in its embodiments, respectively.

Additional objects and advantages of the invention will be set forth in part in the description, or may be learned by practice of the invention. The objects and advantages of the invention will be realized and attained by means of the elements and combinations particularly pointed out in the appended claims. Embodiments of the invention are disclosed in the detailed description section and in the dependent claims.

It is understood that both the foregoing general description and the following detailed description are exemplary and explanatory only and are not restrictive of the invention, as claimed.

### Brief Description of the Drawings

The accompanying drawings, which are incorporated in and constitute a part of this specification, illustrate exemplary embodiments of the invention and, together with the description, explain the principles of the invention. In the drawings,
Fig. 1 is a schematic block diagram for illustrating an implementation of the inventive electronic data element within a computer system.
Fig. 2 is an exemplary block diagram for illustrating operations applicable on the electronic data element.
Fig. 3 is an exemplary flow diagram for illustrating a first implementation of data processing process using the electronic data element.
Fig. 4 is an exemplary flow diagram for illustrating a second implementation of data processing process using the electronic data element.
Fig. 5 is an exemplary flow diagram for illustrating a third implementation of data processing process using the electronic data element.
Fig. 6 is an exemplary flow diagram for illustrating a first implementation of data replicating process using the electronic data element.
Fig. 7 is an exemplary flow diagram for illustrating a second implementation of data replicating process using the electronic data element.
Fig. 7a is an exemplary flow diagram for illustrating a further implementation of data replicating process using the electronic data element.
Fig. 8 is an illustration of the chronological sequence of the states of the electronic data element and of steps according to the inventive method, performed by several independent processes.

### Detailed Description

Reference will now be made in detail to the principles of the invention by explaining the invention on the basis of a data processing process, examples of which are illustrated in the accompanying drawings. Examples, mentioned therein, are intended to explain the invention and not to limit the invention in any kind.

Within the concept of this disclosure, the terms used shall have their usual meaning in the context of the field of data processing unless defined otherwise in the following sections.

A computer system broadly refers to any stand alone computer such as a PC or a laptop or a series of computers connected via a network, e.g. a network within a company, or a series of computers connected via the internet.

Computer systems and programs may be closely related. As used herein, phrases, such as "the computer provides" and "the program provides or performs specific actions", "a user performs a specific action" are used to express actions by a computer system that may be controlled by a program or to express that the program or program module may be designed to enable the computer system to perform the specific action or to enable a user to perform the specific action by means of a computer system.

The term data object broadly refers to any kind or type of data, e.g. numerical or textual data, image data, meta data, irrespective whether the data are implemented as whole files or parts of files or fields in tables, irrespective whether they are stored in volatile memory or non volatile memory. As an example, data objects may be implemented as one or more fields of one or more tables, particularly of tables of a relational data base system. Processing of such data objects comprises usual operations on data, such as calculating, amending, copying, deleting, inserting The term commit broadly refers to a final step in the successful completion of a previously started database change as part of handling a transaction in a computing or computer system.

The term source/target system broadly refers to any computer system with or without software applications, in which data objects are/can be stored. Source and target system can share devices. Consequently, source and target system may be implemented on the same computer system.

A data structure broadly refers to a specialized format for organizing and storing data. Data structure types include the array, the file, the record, the table, the tree, etc. Such data structures may be designed to organize data to suit a specific purpose so that it may be accessed and use in appropriate ways. In computer programming, a data structure may be selected or designed to store data or data objects for the purpose of working on it with various algorithms. A data element, within the scope of this disclosure, is a data stored in a data structure. The inventive electronic data element may also be interpreted as a data object as defined previously. The term electronic data element is used in order to distinguish over the data objects to be processed.

In computer programming languages, an inventive electronic data element may be implemented as one or more lines of one or more tables, each line having one or more fields. In object orientated programming an electronic data element may be implemented by an instance of a class. The class then has at least a variable for an identifier (abbreviated as "ID") and a variable for the state.

A first embodiment of the electronic data element is characterized in that said data element is implemented as one or more first fields and a second field of a table, whereby the one or more first fields contain an identifier and the second field contains information on the state for the identifier in the one or more first field. An alternative embodiment of the electronic data element is characterized in that said data element is implemented as one or more first fields in a first table and a second field in a second table, whereby the one or more first fields in the first table contain an identifier and the second field in the second table contains information on the state for the identifier in the one or more first fields of the first table.

The term ID broadly refers to a type of data, which allows an identification of a data object or a set of data objects to be processed, it can be implemented for example as a number or a combination of alphanumerical characters. So, the inventive electronic data element may be implemented as two fields of a table, in the first of which an ID is stored, and in the second of which information on the state of the electronic data element are stored, e.g. three different data, e.g. "I" or "II" or "III", so defining the first, second or third state of the electronic data element.

One or more of the following operations may be allowed to be performed on the electronic data element: create an electronic data element having the first state, changing the first state to the second or third state, changing the second state to the third state, blocking or deblocking a change of state, setting/deleting a lock (see below), particularly a shared lock, on the ID, requesting the state of the ID. The change of the state may be made dependent on predefinable conditions, e.g. whether a (shared) lock is set on the ID. Vice versa, the setting of a lock may be made dependent on the state: if the state is the second state, no shared lock is allowed to be set on the ID, what is one example of a possible implementation of the second state. A change in state from III to I or II is forbidden. Advantageously a further variable may be available, which may have a state/content "default" or "non default", so defining the respective electronic data element as a default element.
Setting the electronic data element into the second state may be implemented automatically by an independent program or "manually" by a user of the computer system. One or more electronic data elements may be set to the second state.
A change in state may be implemented by changing the entry in the field for the state information from a symbol (e.g. character, number, sign or combinations thereof) for the first or second state to a symbol for the third state.

A lock is a mechanism of a database or software application, which prevents a particular data from being accessed by other applications. This is now explained in more detail.

As is known from the state of the art, a computer database system automatically sets database locks when it receives change statements (INSERT, UPDATE, MODIFY, DELETE) from a program. Database locks are physical locks on the database entries affected by these statements. Only a lock for an existing database entry can be set, since the lock mechanism uses a lock flag in the entry. These flags are automatically deleted in each database commit. This means that database locks can never be set for longer than a single database LUW (logical unit of work).

Physical locks in the database system may therefore in some circumstances be insufficient for the requirements of locking data. In some applications locks must remain set for the duration of several LUW steps. They must also be capable of being handled by different work processes and even different applications. To comply with such requirements, so called logical locks have been created.

Unlike the database application, which sets physical locks, the setting of logical locks means that a locked data object is not physically locked in the database table. A logical lock may be implemented merely as an entry of a lock argument in a central lock table. The lock argument may be the primary key field of the data object to be locked, e.g. the ID. The logical lock is independent of database LUWs. It may be released either implicitly when a database update or a transaction ends, or explicitly, by deleting the entry in the central lock table. Consequently, the effectiveness of the logical locks advantageously influenced by cooperative application programming. Since the concept of logical locks uses no physical locks in the database tables themselves, all programs that use the same application objects must look in the central table themselves for any logical locks. There is no mechanism that automatically prevents a program from ignoring the locks in the lock table. At least two types of logical locks may be implemented:

### Shared lock

Shared locks (or read locks) set by an application (or program) allow to prevent data from being changed by other applications while being read by that application. Shared locks prevent other programs from setting an exclusive lock (write lock) to change the object. It does not, however, prevent other programs from setting further shared locks.

### Exclusive lock

Exclusive locks (or write locks) set by an application allow to prevent data from being changed while that application is changing the data itself. An exclusive lock, as its name suggests, locks an data object for exclusive use by the program that sets it. No other program can then set either a shared lock or an exclusive lock for the same application object.

The concept of logical locks allows to set one or more locks for a data object as defined above, particularly for an ID, which lock exists for the duration of more than one LUW and which may be handled by more than one application.

Use of both concepts is made by the inventive electronic data element and method as will be described below in more detail.

A first embodiment of the inventive method as described in the summary section is characterized in that the method further comprises a step of b) selecting one of the previous electronic data elements, which has the first state, and assigning it to one or more data objects and storing the one or more data objects.

When being in the first state, an inventive electronic data element can be accessed by processes, which processes a data object, and can be assigned to one or more data objects, processed by any of this processes. Assigning an electronic data element to a data object may be implemented e.g. by storing a copy of it together with the data object or by storing a copy of it together with a second ID, which unambiguously identifies the particular data object, in a separate table. Alternatively, a link to the electronic data element may be added and stored. Further alternatively, a link to the data object or an identifier of it and the ID of the electronic data element may be stored in a separate table.
In the first state, a data processing process is allowed to set a shared lock on the electronic data element.
If the electronic data element is in the second state, the electronic data element can still be read and assigned to the data objects. However, the electronic data element can not be accessed, i.e. setting a shared lock on that electronic data element is not allowed for that data processing process.
If the electronic data element is in the third state, it can neither be accessed by a data processing process nor be assigned to a data object. However, replicating processes can use this third state to select all data objects, which have a particular electronic data element of the third state assigned. Because of the properties of the three states as described above, this (or these) particular third state electronic data element(s) can no more be assigned nor accessed by any other data processing process. Thus, by using replication processes, which select data objects having third state electronic data elements assigned, it is assured that no data object can be omitted because of time gap problems as described in the related art section.
In order to put this to practice, the data processing processes have to be programmed accordingly.

A further embodiment comprises dependent or independent of steps a) to c),
d) creating a further electronic data element and setting it to the first state.

If an exclusive lock could be set, no shared loop exists any more on that ID. This means that the processing and storing of the data objects has been finalized and the data objects assigned to that ID can be replicated without the danger of a data loss.

A further embodiment comprises e) defining the further electronic data element as default element and setting the previous electronic data elements to the second state.

A further embodiment is characterized by defining the further electronic data element as default and changing the state of a previous electronic data element, which has been defined as a default element, to the second state.

In a still further embodiment the invention comprises in step b): setting a block having a reference to the process, which sets the block, on the electronic data element, said block preventing the change of the state of the electronic data element to the third state if the state is the first or second state.

Additionally, a still further embodiment comprises in step b): deleting the block, the reference of which points to that process, if the state is the first or second state and if the storing is committed.

An other embodiment is characterized by irreversibly blocking the change of the state of the electronic data element if the state is the third state.

Advantageously, the blocking is implemented by setting a shared lock on the selected electronic data element. Deblocking may be implemented by deleting the shared lock.

In a further embodiment of the inventive method, the electronic data element is implemented as a first table having one or more first fields, which contain an identifier, and wherein the shared lock is set on one or more of the first fields. A still further embodiment is characterized in that the first table has a second field, which contains a state information. A still further embodiment is characterized by a second table having a field, which contains the state information, is linked to the first table.

A still further embodiment is characterized by the blocking is implemented in step b) by setting a shared lock on the electronic data element previous to assignment of the electronic data element to that data object. A still further embodiment is characterized in that the deblocking is implemented in step b) by deleting the shared lock as soon as the storing is committed.

A still further embodiment of the inventive method is
characterized by preceding step c):
f) checking whether a shared lock is set on the electronic data element and in case no shared lock is set, performing step c). A still further embodiment comprises g) in case step c) failed, waiting a predefinable time and returning to f). A still further embodiment is characterized by repeating step g) a preselectable number of times. A still further embodiment is characterized by the checking is implemented by trying to set an exclusive lock on the electronic data element and in case the exclusive lock has been set, returning that no shared lock is set on the electronic data element.

A still further embodiment is characterized by steps b and/or c) being performed independently by independent processes.

A still further embodiment comprises after creating an data element in the first state:
h) creating a predefinable numbers of sub processes for processing the correspondent number of data objects,
i) performing step a) for each data object in the corresponding sub process
j) in the process which created the sub processes: waiting until the corresponding number of shared locks has been set on the data element before changing the state of the data element to the second state,
k) processing and storing the data objects in the respective sub processes.

A still further embodiment is characterized in that the electronic data element comprises a GUID or a time stamp. The term GUID is known in the art and broadly refers to a global unique identifier. It is a term used for a number that programming generates to create a unique identity for an entity such as a Word document. GUIDs are widely used in products to identify interfaces, replica sets, records, and other objects. Different kinds of objects have different kinds of GUIDs - for instance, a Microsoft Access database uses a 16-byte field to establish a unique identifier for replication. And a time stamp contains date and time of a specific action performed on the data object. Date and/or time may be stored in separate fields of the ID part of the electronic data element. A still further embodiment is characterized by the data elements in the third state are numbered consecutively. A still further embodiment is characterized in that the shared locks are logical read locks.

A still further embodiment is a the inventive method for use in an enterprise resource planning software. A particular use is the processing, storing and replicating of data objects of the financial area, e.g. booking, accounting, invoicing, receipt, voucher ... objects.

The invention is now described in more detail by way of reference to the drawings.

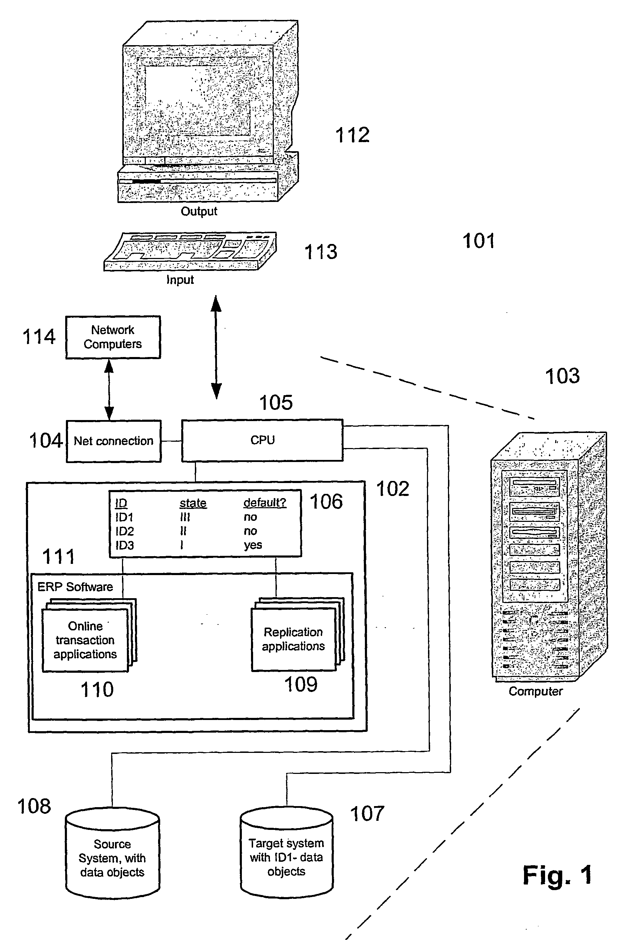

Fig. 1 depicts one example of an implementation of an embodiment of the invention: A computer system with program modules for performing the inventive method.
Fig. 1 shows a computer system 101 comprising a computer 103 having a CPU 105, a working storage 102 (memory), in which an software application 111 is stored for being processed by CPU 105. Software application 111 comprises program modules 109, 110 for carrying out data replication and data processing according to the inventive method. The inventive electronic data elements are implemented in a table 106 comprising a column for identifiers (abbreviated as "ID" and numbered consecutively, e.g. ID1, ID2, ID3, the latter being defined as default ID, abbreviated as "DID"), a column for the state and a column for the default quality. Table 106 is stored in memory 102. The default quality may be implemented by adding - in general sense - "yes" in a field for the default status ("default?" in Fig. 1)). Computer System 101 further comprises input means 113, output means 112 for interaction with a user, e.g. for starting the program modules and/or for data input, and general input/output means 104, including a net connection 114, for sending and receiving data. A plurality of computer systems 101 can be connected via the net connection 114 in the form of a network 113. In this case the network computers 113 can be used as further input/output means, including the use as further storage locations.
Computer system 103 further comprises a first storage means 107, in which the data objects of the source system are stored. A second storage means 108, is the storage means of the target system. Within the terms of this description, the source system in Fig. 1 is the computer system 103 minus storage means 107, and the target system is the computer system 103 minus the storage means 108. However, the target or source system may be any other network computer 114.

In case the program modules 110 are processed by CPU 105 in order to carry out the inventive method, any data objects, which are transferred to the modules 110 are processed by these modules 110. The inventive processing comprises checking, within each module 110, whether a DID is available. In the example in Fig. 1, an ID "ID3" is defined as DID. Module 110 then checks, whether the DID is in state I. This may be performed by querying table 106. An alternative method is trying to set a shared lock on that DID. In case the shared lock has been set, the DID is in state I. Then, the DID is assigned to the data objects processed by module 110 and the data objects are processed and stored on the storage means 108. After the commit of the storage of the data objects assigned to the DID, the state of the DID is set to III by making an entry in the table 106. If a shared lock has been set, the shared lock on the DID set by the particular module 110 is deleted. Parallel to this process, a replication module 109 may be processed. Such a module checks whether there is an ID in state III. This check may be performed by querying table 106 or, alternatively, by trying to set an exclusive lock on one or more of the IDs contained in the central lock table 106. If the exclusive lock has been set on one of the Ids, the respective ID is in state III. Then, the data objects assigned to that ID - ID1 in Fig. 1 - are replicated to the target system. The data objects may be changed by the replication process (e.g. compressed, or deprived of redundant or superfluous information).

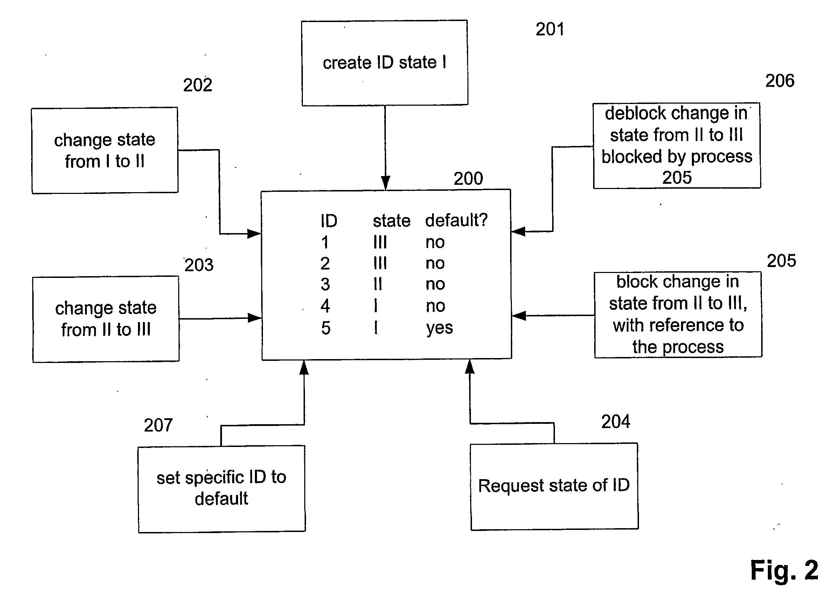

Fig. 2 shows an implementation of five electronic data elements in the form of five lines of a table 200 having the three columns ID, state and default. This organization of table 200 can be interpreted as the structure of the electronic data element. The following operations may be allowed to be performed on the table 200, basically by independent processes: A new electronic data element in state I may be created by a process 201 by adding a new line with corresponding contents of the respective fields to the table 200. A process 202 may change the state from I to II. A process 203 may change the state of an electronic data element from II to III, if this change has not been blocked by a one or more processes such as process 205. A change in state from III to II or I is not allowed. The blocked change in state I or II may be deblocked by a process 206 for the own block. Blocking and deblocking may be implemented by setting and deleting a shared lock on an electronic data element. A specific ID may be defined as a default ID by a process 207 by a corresponding entry in the "default?" column. The process 207 assures that only one DID exist at a time. A process 204 may request the state of an electronic data element and may transfer it to an other process. Basically, a plurality of electronic data elements may exist in each of the three states.
It is repeated in this context that the electronic data element could also be implemented by three tables having only one column, ID, state, default?, respectively, linked together by the respective lines, so as to behave as one table. A corresponding 2/1 combination is also possible. Additionally, the ID may comprise two or more fields of two or more columns, e.g. a number plus a date field plus a time field, with corresponding alternatives in splitting.

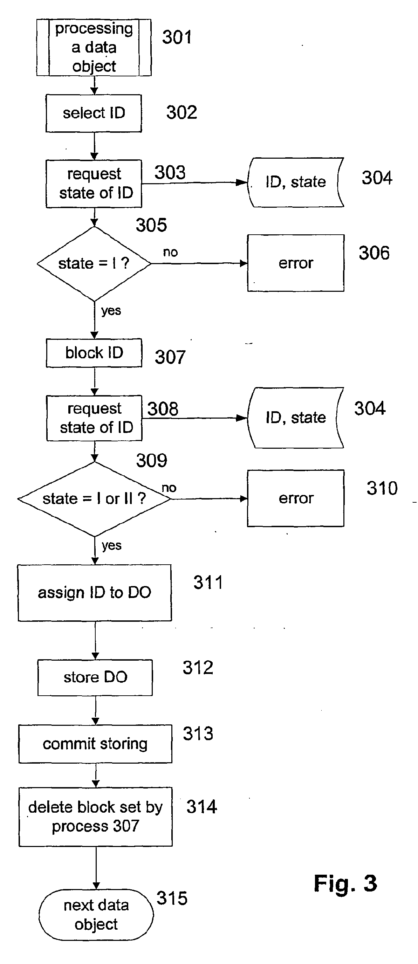

Fig. 3 shows a flow diagram of a process according with the principles of the invention. In a step 301, a software application (abbreviated as "SA") or program module processes a data object (abbreviated as "DO") in a computer system. In a step 302 an ID, which has been created previously, is selected from a central ID table. In step 303 the state of the ID is requested. If the state is not equal to I, the process branches in step 305 to an error process 306, which itself may go back to step 302. Otherwise the ID is blocked in step 307. Then the state of the ID is requested again in step 308. If the state is I or II, the ID is assigned to the data object processed by the SA in step 311. Otherwise the process branches to an error process 310. The repeated request of the state assures that a possible change in the state of the ID, which might be caused by an independent, parallel running process, is taken into account. In such a case, the selected ID is not allowed to be assigned to the data object. Instead, an other ID has to be selected, or the process has to be terminated.
The DO is then stored in step 312. If the storing is committed in step 313, the block on the ID set in step 307 is deleted. The process 301 then terminates or restarts with a new DO.

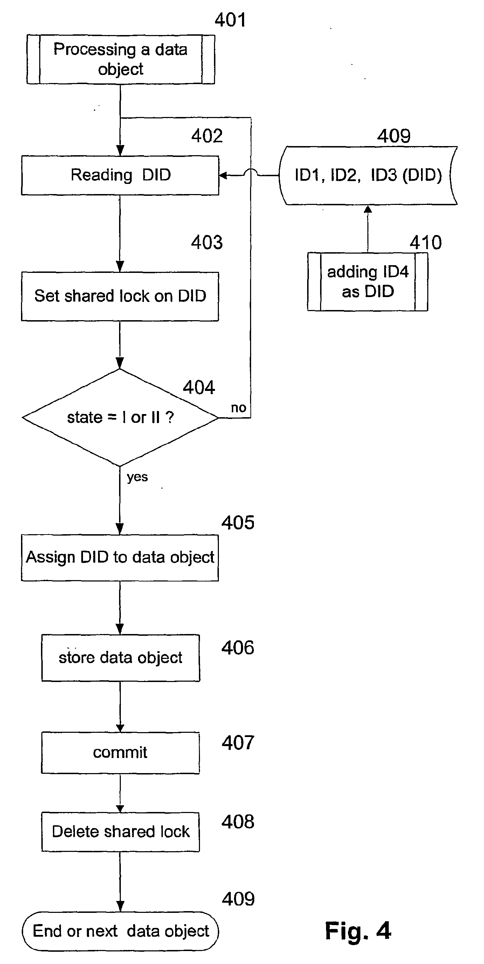

Fig. 4 shows a flow diagram of a process according with the principles of the invention using default IDs. In a step 401 a software application or program module (abbreviated as "SA") processes a data object in a computer system. The SA reads in a step 402 from a table 409 the actual DID in the computer system. The SA then tries to set in step 403 a shared lock on said DID. In step 404 it is checked, whether the state of the DID is I or II. If no, i.e. if the state is III, the SA returns to step 402. This loop may be run through a predefinable number of times and may, in case no lock could be set, then be broken off with an error message. The setting of the shared lock in 403 and the check whether it is successfully set may advantageously be implemented as one "atomic" step. This means that both steps are executed essentially at the same time or, in other words, the time gap between both steps is essentially zero. If the state is I or II, the SA assigns the DID to the processed data object in step 405 and stores the data object in step 406. After the commit of the storing in step 407 the shared lock set in 403 is deleted in step 408. In the step 407 it may be included in a loop that the SA waits for the commit of the storing process from the system routine, which writes the data object to the storage device. Again, this loop may be run through a predefinable number of times and may, in case of no commit, then be broken off with an error message.

After step 408, the SA may be terminated or a further data object may be selected for processing in step 409.

Parallel to this SA an other software application 410 may add a further ID to the ID table 409 and may define this new ID as the default ID.

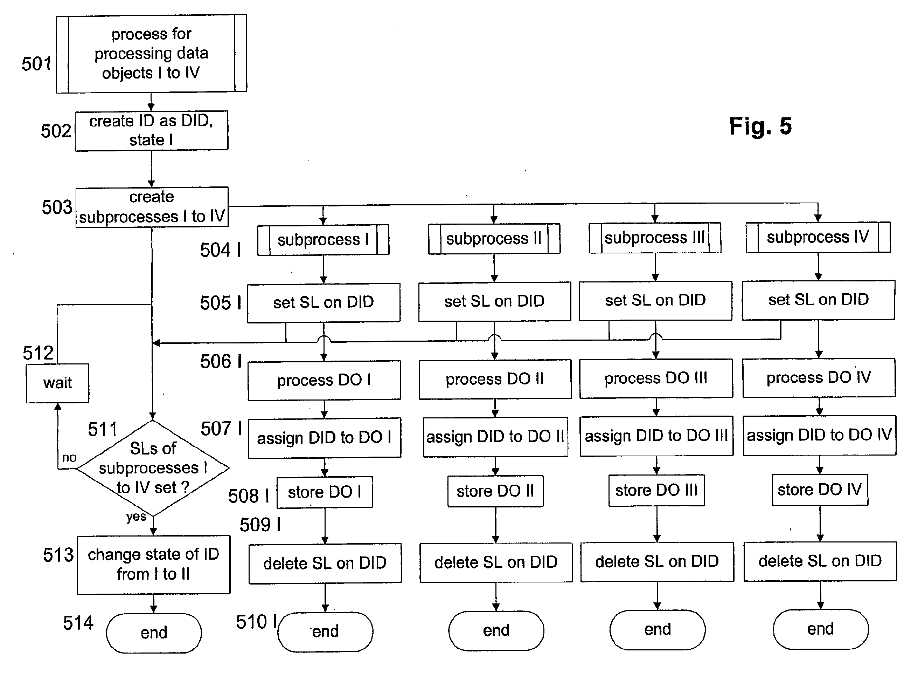

Fig. 5 is an is an exemplary flow diagram of a further implementation of data processing process using the electronic data element for processing at least two DO in parallel. In a step 501 a software application or program module (abbreviated as "SA") processes four data objects I to IV in a computer system. In a step 502 the SA creates an ID as DID and sets it to state I. In a next step 503 the SA 501 creates four sub processes I to IV for further processing the DO I to IV in a respective sub process. The sub processes ("SP") I to IV run independently from each other and parallel. For simplicity, only the sub process 504 I is described in the following section. SP I sets in a step 505 I a shared lock on the DID. This prevents the DID from being set to state III. If the shared lock has been set, a corresponding message is sent to the SA. The DO is then processed in step 506 I, the DID is assigned to the DO in step 507 I, the DO is stored in step 508 I and after the commit of the storing process, the shared lock set on the DID by the SP I is deleted. The SP then ends in step 510 I. The main process SA 501 waits in the loop 511, 512 until all sub processes have successfully set the respective shared locks. If this condition is fulfilled, the SA changes the state of the DID from I to II in step 513. This means that from that time on the DID can not be accessed by any other process, i.e. no other process can use. However, the assignment of the DID by processes, which have already accessed the DID, i.e. SP I to IV, is not restricted. The SA then ends in step 514.

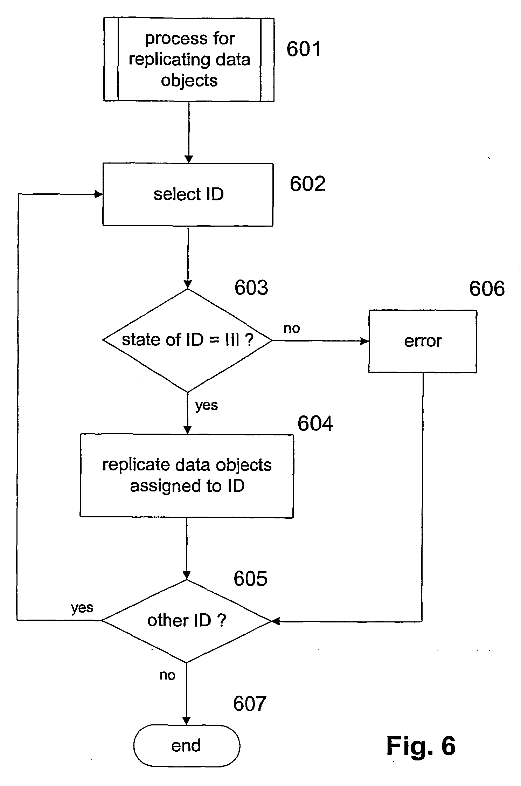

Fig. 6 shows an example of a flow chart for a process, which uses the electronic data element for replication of data objects. A replication process 601 selects an ID from an ID table in step 602. In step 603 it is checked, whether the selected ID is in state III. If yes, all stored data objects, which have that ID assigned are replicated from their source system to a target system in step 604. If no, the replication process branches to an error routine 606, which may create an error message and which returns to step 602 or end the process. If all data objects have been replicated, the process checks in step 605 whether data objects of an other ID are to be replicated. IF yes, it branches back to step 602, otherwise it ends in step 607.

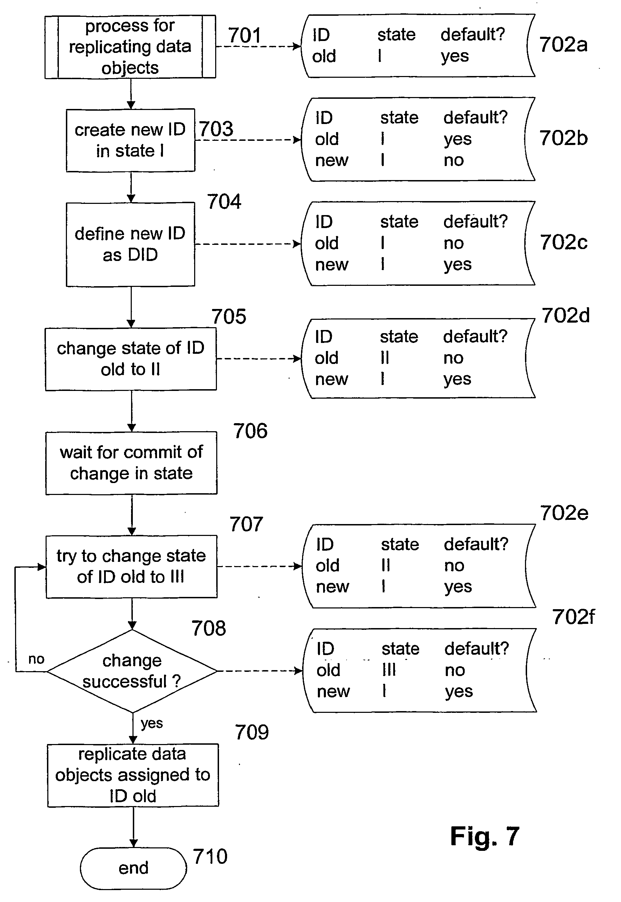

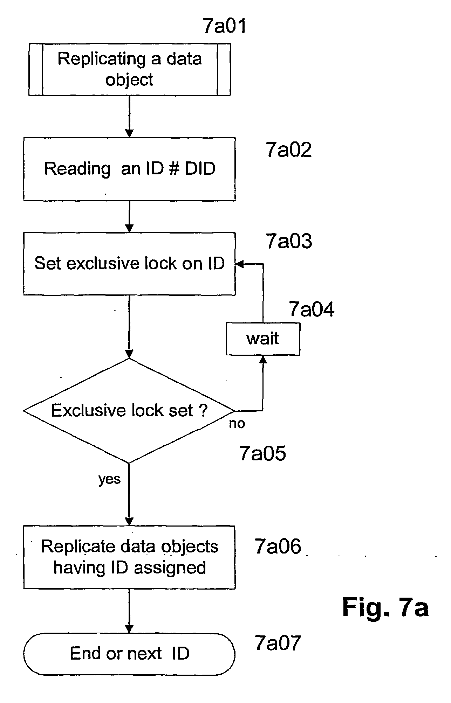

Fig. 7 shows an other example of a flow chart for a process, which uses the electronic data element for replicating data objects. In the process of Fig. 7 a software application (SA) 701, which may run in parallel to processes for processing data objects, starts in a state at which an ID (the expression "electronic data element" and "ID" are used synonymously) "old" is in a state I and defined as default ID according to table 702a in order to replicate one or more data objects. Table 702 comprises three columns. The first contains in its field information on the ID, i.e. the ID, the second on the state, i.e. "I" or "II" or "III", the third on the default property, i.e. "yes" or "no". In 702a the table contains one electronic data element: consisting of the fields of the table containing "old", "I", "yes". SA creates in step 703 a new ID "new" and sets it to state I, table 702b. In step 704, the new ID is defined as default, what means that "yes" is entered in the corresponding field of the default? column. At the same time, the old ID is redefined as non default by entering "no" into the corresponding default? field, 702c. In step 705, the state of the old ID is changed from I to II.

An other example of a replication process is depicted in the flow chart of Fig. 7a:
A replication application 7a01 reads in step 7a02 an ID, which is not equal to the DID, from an ID table in the computer system and tries to set an exclusive lock on said ID in step 7a03. The application then checks in step 7a05 whether the exclusive lock could be set. In case no, the application returns after waiting a predefinable time in step 7a04 to step 7a03. The loop may be broken off after a predefinable number of unsuccessful attempts. In case yes of step 7a05, the application replicates in step 7a06 the data objects, which have the ID assigned, from their source system to a target system. After that the replication application may be terminated or an other ID may be selected in step 7a07.

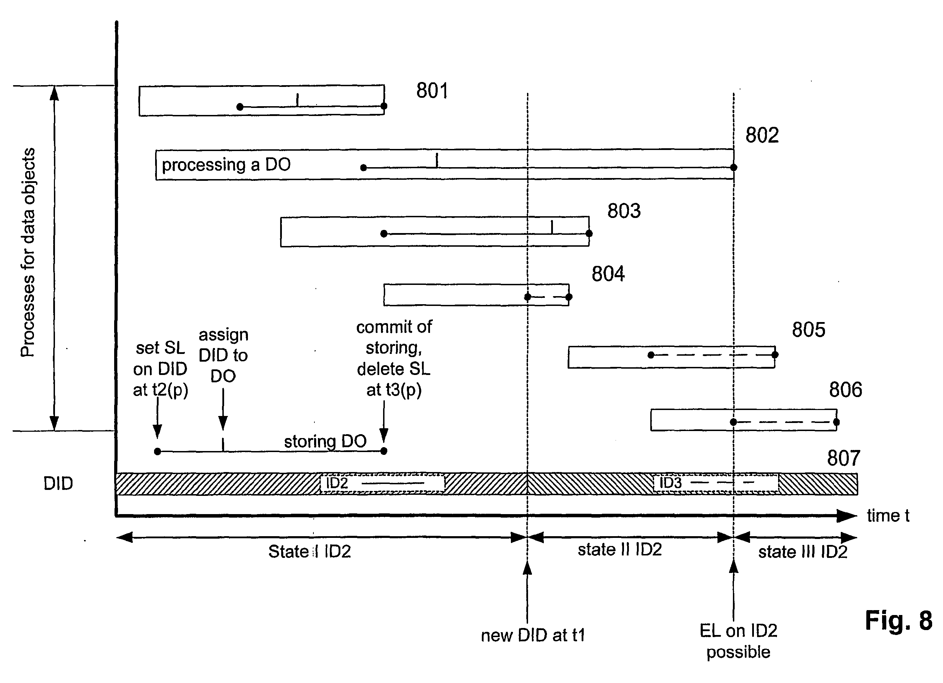

Fig. 8 shows an illustration of the chronological sequence of steps according to the inventive method as described with respect to Fig. 2, performed by several independent processes. Six software applications 801 to 806 process each one or more different data objects (abbreviated "DO"). At the starting time of processes 801 to 804, the ID2 is the default ID. From the time t1 on, the new ID ID3 is the default ID and the state of the ID2 is changed from I to II. From then on, no process can access ID2 and use it for assigning it to the DO. The checking of whether the ID is in state I or II can be implemented by querying the respective state field of the electronic data element if this is implemented as a line of a table as described above. The change in state may be performed by an independent process, not shown in the figure. Each of the processes reads the actual DID (comp. Fig. 4). At a time t2(p), which depends on the process, a process 801 to 806 blocks a change of the state from I,II to III of the actual valid DID by setting a shared lock (abbreviated "SL") on the actual valid DID, which is ID2 for the processes 801 to 803 and ID3 for the processes 804 to 806. After setting the SL, the processes 801 to 806 assign the respective DID, on which they have set the SL to the data objects and store the data objects to the source system. Consequently, process 803 assigns still ID2 to its DO although ID2 is at the time of assignment not the actual valid DID. The processing of the DO and the storing takes a certain period of time, depending on the DO and process. This time ends at a time t3(p), at which the commit of the storing routine is received. After that receipt, the processes 801 to 806 delete the respective SL.
From the time on, at which the deletion of the last SL on ID2 has been committed (process 802), the state of ID2 can be set to III. Whether this is possible can be checked by trying to set an exclusive lock on the ID. If an exclusive lock can be set successfully, the state can be changed to III. From then on, the DO having that ID assigned can be replicated.

In further embodiments of the inventive method, a combination of the processes according to Figs. 3 and 6, 4 and 7/7a, respectively, may be installed and run in parallel on a computer system.

The use of the inventive method end electronic data element, as described in the preceding sections, assures, that no data object can be overlooked by replicating applications.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to." Means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited.

To provide for interaction with a user, the invention can be implemented on a computer system having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or haptic feedback; and input from the user can be received in any form, including acoustic, speech, or haptic input.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices (storage means) for storing data, e.g., magnetic, magneto-optical disks, or optical disks. Information carriers suitable for embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

Computer programs based on the written description and flow charts of this invention are within the skill of an experienced developer. The various programs or program modules can be created using any of the techniques known to one skilled in the art or can be designed in connection with existing software. For example, programs or program modules can be designed in or by means of ^{®} Java, C++, HTML, XML, or HTML with included Java applets or in SAP R/3 or ABAP. One or more of such modules can be integrated in existing e-mail or browser software.

Modifications and adaptations of the present invention will be apparent to those skilled in the art from consideration of the specification and practice of the invention disclosed herein. The foregoing description of an implementation of the invention has been presented for purposes of illustration and description. It is not exhaustive and does not limit the invention to the precise form disclosed. Modifications and variations are possible in light of the above teachings or may be acquired from the practicing of the invention. For example, the described implementation includes software, but systems and methods consistent with the present invention may be implemented as a combination of hardware and software or in hardware alone. Additionally, although aspects of the present invention are described for being stored in memory, one skilled in the art will appreciate that these aspects can also be stored on other types of computer-readable media, such as secondary storage devices, for example, hard disks, floppy disks, or CD-ROM; the Internet or other propagation medium; or other forms of RAM or ROM. It is intended that the specification and examples be considered as exemplary only, with a true scope of the invention being indicated by the following claims.

## Claims

1. A computer-implemented method for processing one or more data objects in a source computer system (108) and replicating the one or more data objects to a target computer system (107), comprising online transaction processes (110) performing amending, deleting, changing or inserting operations on the one or more data objects and replication processes (109) replicating the thus operated one or more data objects,
**characterized by**
- using one or more data elements (106, 200), which allow an identification of a data object or a set of data objects to be processed and which can be set to three possible states,
a first state, in which a data element (106, 200) can be accessed by one or more of the online transaction processes (110) and in which this data element (106, 200) is assignable to one or more of the data objects,
a second state, in which a data element (106, 200) can not be accessed by the online transaction processes (110) but is still assignable to one or more of the data objects by said one or more online transaction processes (110) having already accessed the data element (106, 200) at a time in which it has been in the first state, and
a third state, in which a data element (106, 200) can not be accessed by the online transaction processes (110) and is not assignable to the one or more data objects, whereby one of the one or more data elements (106, 200) is definable as a default data element (207),
- defining a data element (106, 200) as the default data element and
- a) setting the default data element to the first state (207),
- performing by means of the online transaction processes (110) the amending, deleting changing or inserting operations on the one or more data objects,
- b) checking by means of the online transaction processes (110) one or more of the data elements (106, 200), whether a default data element is accessible, and if yes, assigning that data element (106, 200) to the one or more data objects,
- storing by means of the online transaction processes (110) the one or more data objects having that data element assigned on the source computer system (108),
- c) changing, after commit of the storing processes of all data objects having that data element assigned (106, 200), the state of the data element to the third state,
- replicating by means of the replicating processes such (109) data objects to the target computer system (107), which have a data element(106, 200) of the third state assigned and
- changing the state of the data element (106, 200) from the first state to the second state if another data element (106, 200) is defined as the default data element.

2. The method of one claim 1, further comprising:
dependent or independent of steps a) to c),
- d) creating a further electronic data element (106, 200) and setting it to the first state.

3. The method of claim 2, further comprising:
- e) defining the further electronic data element (106, 200) as the default element and changing the state of the previous electronic data element, which has been defined as a default element, to the second state.

4. The method of one or more of claims 1 to 3, further comprising:
in step b): setting a block having a reference to the process, which sets the block, on the electronic data element (106, 200), the block preventing the change of the state of the electronic data element to the third state if the state is the first or second state.

5. The method of claim 4, further comprising for a process which has set a block:
in step b): deleting the block, the reference of which points to that process, if the state is the first or second state and if the storing is committed.

6. The method of one or more of claims 1 to 5, further comprising:
- irreversibly blocking the change of the state of the electronic data element (106, 200) if the state is the third state.

7. The method of one of claims 4 to 6, wherein
the blocking is implemented by setting a shared lock on the selected electronic data element.

8. The method of claim 7 wherein
the electronic data element (106, 200) is implemented as a first table having one or more first fields, which contain an identifier, and wherein the shared lock is set on one or more of the first fields.

9. The method of claim 8, wherein
the first table has a second field, which contains a state information.

10. The method of claim 8, wherein
a second table having a field, which contains the state information, is linked to the first table.

11. The method of one or more of claims 4 to 10, wherein
the blocking is implemented in step b) by setting a shared lock on the electronic data element previous to assignment of the electronic data element to that data object.

12. The method of one of claims 5 to 11, wherein
the deblocking is implemented in step b) by deleting the shared lock as soon as the storing is committed.

13. The method of one of claims 1 to 12, further comprising:
preceding step c):
- f) checking whether a shared lock is set on the electronic data element and in case no shared lock is set, performing step c).

14. The method of claim 13, further comprising:
- g) in case step c) failed, waiting a predefinable time and returning to f).

15. The method of claim 14, further comprising:
repeating step g) a preselectable number of times.

16. The method of one of claims 13 to 15, wherein
the checking is implemented by trying to set an exclusive lock on the electronic data element and in case the exclusive lock has been set, returning that no shared lock is set on the electronic data element.

17. The method of one or more of claims 1 to 16, further comprising:
steps a and/or b and/or c) being performed independently by independent processes.

18. The method of one or more of claims 1 to 17, further comprising:
after creating an data element in the first state:
- h) creating a predefinable number of sub processes for processing the correspondent number of data objects,
- i) performing step b) for each data object in the corresponding sub process
- j) in the process which created the sub processes: waiting until the corresponding number of shared locks has been set on the data element before changing the state of the data element to the second state,
- k) processing and storing the data objects in the respective sub processes.

19. The method of one or more of claims 1 to 18, wherein
the electronic data element comprises a GUID or a time stamp.

20. The method of one or more of claims 1 to 19, wherein
the electronic data elements in the third state are numbered consecutively.

21. The method of one or more of claims 7 to 20, wherein
the shared locks are logical read locks.

22. The method of one of claims 1 to 21,
for use in an enterprise resource planning software.

23. The method of one of claims 1 to 7, wherein the electronic data element is implemented as one or more first fields and a second field of a table, whereby the one or more first fields contain an identifier and the second field contains information on the state for the identifier in the one or more first field.

24. The method of one of claims 1 to 7, wherein the electronic data element is implemented as one or more first fields in a first table and a second field in a second table, whereby the one or more first fields in the first table contain an identifier and the second field in the second table contains information on the state for the identifier in the one or more first fields of the first table.

25. The method of one of claims 1 to 7, wherein the electronic data element is implemented in object oriented programming as an instance of a class.

26. The method of one of claims 1 to 25, wherein a change of the state of the electronic data element from the third state to the second or first state is forbidden.

27. A computer system comprising code means adapted to carry out each of the steps of the methods according to one or more of claims 1 to 26.

28. A computer program comprising code means adapted to perform a method according to one or more of claims 1 to 26, when said program is run on a computer system.

29. A computer program according to claim 28 embodied on a computer-readable medium.

30. A computer program according to claim 28 embodied as a computer data signal.

## Patentansprüche

1. Computerimplementiertes Verfahren zum Verarbeiten eines oder mehrerer Datenobjekte in einem Quellencomputersystem (108) und zum Replizieren des einen oder der mehreren Datenobjekte zu einem Zielcomputersystem (107), umfassend Online-Transaktionsprozesse (110), die Operationen des Abänderns, Löschens, Änderns oder Einfügens an dem einen oder den mehreren Datenobjekten ausführen, und Replikationsprozesse (109), die die so operierten einen oder mehreren Datenobjekte replizieren,
**gekennzeichnet durch**
- Verwenden eines oder mehrerer Datenelemente (106, 200), die eine Identifikation eines Datenobjekts oder einer Menge von Datenobjekten, die verarbeitet werden sollen, erlauben, und die auf drei mögliche Zustände gesetzt werden können,
einen ersten Zustand, in dem einer oder mehrere der Online-Transaktionsprozesse (110) auf ein Datenelement (106, 200) zugreifen können und in dem dieses Datenelement (106, 200) einem oder mehreren der Datenobjekte zuweisbar ist,
einen zweiten Zustand, in dem die Online-Transaktionsprozesse (110) nicht auf ein Datenelement (106, 200) zugreifen können, es aber immer noch durch den einen oder die mehreren Online-Transaktionsprozesse (110), die bereits zu einem Zeitpunkt, zu dem es sich in dem ersten Zustand befand, auf das Datenelement (106, 200) zugegriffen haben, einem oder mehreren Datenobjekten zuweisbar ist und
einen dritten Zustand, in dem die Online-Transaktionsprozesse (110) nicht auf ein Datenelement (106, 200) zugreifen können und es nicht dem einen oder den mehreren Datenobjekten zuweisbar ist, wobei eines der einen oder mehreren Datenelemente (106, 200) als ein Vorgabe-Datenelement (207) definierbar ist,
- Definieren eines Datenelements (106, 200) als das Vorgabe-Datenelement und
- a) Versetzen des Vorgabe-Datenelements in den ersten Zustand (207),
- Durchführen der Operationen des Abänderns, Löschens, Änderns oder Einfügens an dem einen oder den mehreren Datenobjekten mittels der Online-Transaktionsprozesse (110),
- b) Prüfen eines oder mehrerer der Datenelemente (106, 200), ob ein Vorgabe-Datenelement zugänglich ist, und wenn ja, Zuweisen dieses Datenelements (106, 200) zu dem einen oder den mehreren Datenobjekten mittels der Online-Transaktionsprozesse (110),
- Speichern des einen oder der mehreren Datenobjekte, denen dieses Datenelement zugewiesen ist, auf dem Quellencomputersystem (108) mittels der Online-Transaktionsprozesse (110),
- c) nach der Übergabe der Speicherprozesse aller Datenobjekte, denen dieses Datenelement zugewiesen ist (106, 200), Verwandeln des Zustands des Datenelements in den dritten Zustand,
- Replizieren derjenigen (109) Datenobjekte zu dem Zielcomputersystem (107), denen ein Datenelement (106, 200) des dritten Zustands zugewiesen ist, mittels der Replikationsprozesse und
- Verwandeln des Zustands des Datenelements (106, 200) von dem ersten Zustand in den zweiten Zustand, wenn ein anderes Datenelement (106, 200) als das Vorgabe-Datenelement definiert ist.

2. Verfahren nach Anspruch 1, ferner umfassend: abhängig oder unabhängig von den Schritten a) bis c),
d) Erzeugen eines weiteren elektronischen Datenelements (106, 200) und Versetzen dieses in den ersten Zustand.

3. Verfahren nach Anspruch 2, ferner umfassend:
e) Definieren des weiteren elektronischen Datenelements (106, 200) als das Vorgabeelement und Verwandeln des Zustands des vorherigen elektronischen Datenelements, das als ein Vorgabeelement definiert wurde, in den zweiten Zustand.

4. Verfahren nach einem oder mehreren der Ansprüche 1 bis 3, ferner umfassend:
im Schritt b): Setzen eines Blocks mit einer Referenz auf den Prozeß, der den Block setzt, an dem elektronischen Datenelement (106, 200), wobei der Block die Verwandlung des Zustands des elektronischen Datenelements in den dritten Zustand verhindert, wenn der Zustand der erste oder der zweite Zustand ist.

5. Verfahren nach Anspruch 4, ferner umfassend für einen Prozeß, der einen Block gesetzt hat:
im Schritt b): Löschen des Blocks, dessen Referenz auf diesen Prozeß zeigt, wenn der Zustand der erste oder der zweite Zustand ist und wenn das Speichern übergeben ist.

6. Verfahren nach einem oder mehreren der Ansprüche 1 bis 5, ferner umfassend:
irreversibles Blockieren der Änderung des Zustands des elektronischen Datenelements (106, 200), wenn der Zustand der dritte Zustand ist.

7. Verfahren nach einem der Ansprüche 4 bis 6, wobei das Blockieren durch Setzen einer gemeinsam benutzten Verriegelung an dem ausgewählten elektronischen Datenelement implementiert wird.

8. Verfahren nach Anspruch 7, wobei das elektronische Datenelement (106, 200) als eine erste Tabelle mit einem oder mehreren ersten Feldern, die eine Kennung enthalten, implementiert wird und wobei die gemeinsam benutzte Verriegelung an einem oder mehreren der ersten Felder gesetzt wird.

9. Verfahren nach Anspruch 8, wobei die erste Tabelle ein zweites Feld aufweist, das Zustandsinformationen enthält.

10. Verfahren nach Anspruch 8, wobei eine zweite Tabelle mit einem Feld, das die Zustandsinformationen enthält, mit der ersten Tabelle verknüpft ist.

11. Verfahren nach einem der Ansprüche 4 bis 10, wobei das Blockieren im Schritt b) implementiert wird, indem vor der Zuweisung des elektronischen Datenelements zu diesem Datenobjekt eine gemeinsam benutzte Verriegelung an dem elektronischen Datenelement gesetzt wird.

12. Verfahren nach einem der Ansprüche 5 bis 11, wobei die Endblockierung im Schritt b) implementiert wird, indem die gemeinsam benutzte Verriegelung gelöscht wird, sobald das Speichern übergeben ist.

13. Verfahren nach einem der Ansprüche 5 bis 12, ferner umfassend:
vor Schritt c)
f) Prüfen, ob eine gemeinsam benutzte Verriegelung an dem elektronischen Datenelement gesetzt ist, und falls keine gemeinsam benutzten Verriegelung gesetzt ist, Durchführen von Schritt c).

14. Verfahren nach Anspruch 13, ferner umfassend:
g) falls Schritt c) erfolglos geblieben ist, Warten für eine vordefinierbare Zeit und Zurückkehren zu f).

15. Verfahren nach Anspruch 14, ferner umfassend:
Wiederholen von Schritt g) eine vorwählbare Anzahl von Malen.

16. Verfahren nach einem der Ansprüche 13 bis 15, wobei das Prüfen implementiert wird, indem versucht wird, eine exklusive Verriegelung an dem elektronischen Datenelement zu setzen, und falls die exklusive Verriegelung gesetzt wurde, Zurückgegeben, daß keine gemeinsam benutzte Verriegelung an dem elektronischen Datenelement gesetzt ist.

17. Verfahren nach einem oder mehreren der Ansprüche 1 bis 16, ferner umfassend:
die Schritte a und/oder b und/oder c) werden unabhängig durch unabhängige Prozesse ausgeführt.

18. Verfahren nach einem oder mehreren der Ansprüche 1 bis 17, ferner umfassend:
nach dem Erzeugen eines Datenelements in dem ersten Zustand:
h) Erzeugen einer vordefinierbaren Anzahl von Subprozessen zur Verarbeitung der entsprechenden Anzahl von Datenobjekten,
i) Ausführen von Schritt b) für jedes Datenobjekt in dem entsprechenden Subprozeß,
j) in dem Prozeß, der den Subprozeß erzeugt hat: Warten, bis die entsprechende Anzahl gemeinsam benutzter Verriegelungen an dem Datenelement gesetzt wurde, bevor der Zustand des Datenelements in den zweiten Zustand verwandelt wird,
k) Verarbeiten und Speichern der Datenobjekte in den jeweiligen Subprozessen.

19. Verfahren nach einem oder mehreren der Ansprüche 1 bis 18, wobei das elektronische Datenelement eine GUID oder einen Zeitstempel umfaßt.

20. Verfahren nach einem oder mehreren der Ansprüche 1 bis 19, wobei die elektronischen Datenelemente in dem dritten Zustand aufeinanderfolgend numeriert werden.

21. Verfahren nach einem oder mehreren der Ansprüche 7 bis 20, wobei die gemeinsam benutzten Verriegelungen logische Leseverriegelungen sind.

22. Verfahren nach einem der Ansprüche 1 bis 21 zur Verwendung in einer Software für Unternehmensressourcenplanung.

23. Verfahren nach einem der Ansprüche 1 bis 7, wobei das elektronische Datenelement als eines oder mehrere erste Felder und ein zweites Feld einer Tabelle implementiert wird, wobei das eine oder die mehreren ersten Felder eine Kennung und das zweite Feld Informationen über den Zustand für die Kennung in dem einen oder den mehreren ersten Feldern enthalten.

24. Verfahren nach einem der Ansprüche 1 bis 7, wobei das elektronische Datenelement als eines oder mehrere erste Felder in einer ersten Tabelle und ein zweites Feld in einer zweiten Tabelle implementiert wird, wobei das eine oder die mehreren ersten Felder in der ersten Tabelle eine Kennung und das zweite Feld in der zweiten Tabelle Informationen über den Zustand für die Kennung in dem einen oder den mehreren ersten Feldern der ersten Tabelle enthalten.

25. Verfahren nach einem der Ansprüche 1 bis 7, wobei das elektronische Datenelement bei objektorientierter Programmierung als Instanz einer Klasse implementiert wird.

26. Verfahren nach einem der Ansprüche 1 bis 25, wobei eine Verwandlung des Zustands des elektronischen Datenelements von dem dritten Zustand in den zweiten oder ersten Zustand verboten ist.

27. Codemittel umfassendes Computersystem, das dafür ausgelegt ist, jeden der Schritte der Verfahren nach einem oder mehreren der Ansprüche 1 bis 26 auszuführen.

28. Codemittel umfassendes Computersystem, das dafür ausgelegt ist, jeden der Schritte der Verfahren nach einem oder mehreren der Ansprüche 1 bis 26 auszuführen, wenn das Programm auf einem Computersystem ausgeführt wird.

29. Computerprogramm nach Anspruch 28, das auf einem computerlesbaren Medium realisiert ist.

30. Computerprogramm nach Anspruch 28, das als ein Computerdatensignal realisiert ist.

## Revendications

1. Procédé mis en oeuvre sur ordinateur pour le traitement d'un ou de plusieurs objets de données dans un système informatique source (108) et la réplication du ou des objets de données vers un système informatique cible (107), comportant des processus (110) de transactions en ligne effectuant des opérations de correction, de suppression, de modification ou d'insertion sur le ou les objets de données et des processus (109) de réplication répliquant le ou les objets de données ayant subi ces opérations,
**caractérisé par**
- l'utilisation d'un ou plusieurs éléments (106, 200) de données qui permettent l'identification d'un objet de données ou d'un ensemble d'objets de données à traiter et qui peuvent être placés dans trois états possibles :
un premier état dans lequel un élément de données (106, 200) est accessible à un ou plusieurs processus (110) de transactions en ligne et dans lequel cet élément de données (106, 200) peut être affecté à un ou plusieurs des objets de données,
un deuxième état, dans lequel un élément de données (106, 200) n'est pas accessible aux processus (110) de transactions en ligne mais peut encore être affecté à un ou plusieurs des objets de données par ledit ou lesdits processus (110) de transactions en ligne ayant déjà accédé à l'élément de données (106, 200) à un instant où il était dans le premier état, et
un troisième état, dans lequel un élément de données (106, 200) n'est pas accessible aux processus (110) de transactions en ligne et ne peut pas être affecté audit ou auxdits objets de données, en conséquence de quoi l'un parmi le ou les éléments de données (106, 200) peut être défini comme élément de données (207) par défaut,
- la définition d'un élément de données (106, 200) comme élément de données par défaut et
- a) le placement de l'élément de données par défaut (207) dans le premier état,
- la réalisation, au moyen des processus (110) de transactions en ligne, des opérations de correction, de suppression, de modification ou d'insertion sur le ou les objets de données,
- b) la vérification, au moyen des processus (110) de transactions en ligne, sur un ou plusieurs des éléments de données (106, 200), de l'accessibilité d'un élément de données par défaut et, dans l'affirmative, l'affectation de cet élément de données (106, 200) à l'objet ou aux objets de données,
- le stockage, au moyen des processus (110) de transactions en ligne, du ou des objets de données auxquels a été affecté cet élément de données sur le système informatique source (108),
- c) le passage, après la validation des processus de stockage de tous les objets de données auxquels a été affecté cet élément de données (106, 200), de l'état de l'élément de données au troisième état,
- la réplication vers le système informatique cible (107), au moyen des processus (109) de réplication, de ceux des objets de données auxquels a été affecté un élément de données (106, 200) du troisième état et
- le passage de l'état de l'élément de données (106, 200) du premier état au deuxième état si un autre élément de données (106, 200) est défini comme l'élément de données par défaut.

2. Procédé selon la revendication 1, comportant en outre :
les étapes dépendantes ou indépendantes a) à c),
- d) la création d'un élément électronique de données (106, 200) supplémentaire et son placement dans le premier état.

3. Procédé selon la revendication 2, comportant en outre :
- e) la définition de l'élément électronique de données (106, 200) supplémentaire comme l'élément par défaut et le passage de l'état de l'élément électronique de données précédent, qui était défini comme un élément par défaut, au deuxième état.

4. Procédé selon une ou plusieurs des revendications 1 à 3, comportant en outre :
à l'étape b) : la mise en place d'un bloc doté d'une référence vers le processus qui met en place le bloc sur l'élément électronique de données (106, 200), le bloc empêchant le passage de l'état de l'élément électronique de données au troisième état si l'état est le premier ou le deuxième état.

5. Procédé selon la revendication 4, comportant en outre, pour un processus ayant mis en place un bloc :
à l'étape b) : la suppression du bloc dont la référence pointe vers ce processus, si l'état est le premier ou le deuxième état et si le stockage est validé.

6. Procédé selon une ou plusieurs des revendications 1 à 5, comportant en outre :
- le blocage irréversible du changement d'état de l'élément électronique de données (106, 200) si l'état est le troisième état.

7. Procédé selon l'une des revendications 4 à 6,
le blocage étant mis en oeuvre en plaçant un verrou partagé sur l'élément électronique de données sélectionné.

8. Procédé selon la revendication 7,
l'élément électronique de données (106, 200) étant mis en oeuvre comme un premier tableau doté d'un ou plusieurs premiers champs contenant un identifiant, et le verrou partagé étant placé sur un ou plusieurs des premiers champs.

9. Procédé selon la revendication 8,
le premier tableau étant doté d'un deuxième champ qui contient une information d'état.

10. Procédé selon la revendication 8,
un deuxième tableau doté d'un champ qui contient l'information d'état étant lié au premier tableau.

11. Procédé selon une ou plusieurs des revendications 4 à 10,
le blocage étant mis en oeuvre à l'étape b) en plaçant un verrou partagé sur l'élément électronique de données préalablement à l'affectation de l'élément électronique de données à cet objet de données.

12. Procédé selon l'une des revendications 5 à 11,
le déblocage étant mis en oeuvre à l'étape b) en supprimant le verrou partagé dès que le stockage est validé.

13. Procédé selon l'une des revendications 1 à 12, comportant en outre :
avant l'étape c) :
- f) la vérification du placement d'un verrou partagé sur l'élément électronique de données et, dans le cas où aucun verrou partagé n'est placé, la réalisation de l'étape c).

14. Procédé selon la revendication 13, comportant en outre :
- g) dans le cas où l'étape c) a échoué, l'attente pendant un temps susceptible d'être prédéfini et le retour à f).

15. Procédé selon la revendication 14, comportant en outre :
la répétition de l'étape g) un nombre de fois susceptible d'être présélectionné.

16. Procédé selon l'une des revendications 13 à 15,
la vérification étant mise en oeuvre en essayant de placer un verrou exclusif sur l'élément électronique de données et, dans le cas où le verrou exclusif a été placé, en retournant l'information selon laquelle aucun verrou partagé n'est placé sur l'élément électronique de données.

17. Procédé selon une ou plusieurs des revendications 1 à 16, comportant en outre :
la réalisation des étapes a) et / ou b) et / ou c) indépendamment par des processus indépendants.

18. Procédé selon une ou plusieurs des revendications 1 à 17, comportant en outre :
après la création d'un élément de données dans le premier état :
- h) la création d'un nombre susceptible d'être prédéfini de sous-processus destinés à traiter le nombre correspondant d'objets de données,
- i) la réalisation de l'étape b) pour chaque objet de données dans le sous-processus correspondant,
- j) dans le processus ayant créé les sous-processus :
l'attente jusqu'à ce que le nombre correspondant de verrous partagés ait été placé sur l'élément de données avant de faire passer l'état de l'élément de données au deuxième état,
- k) le traitement et le stockage des objets de données dans les sous-processus respectifs.

19. Procédé selon une ou plusieurs des revendications 1 à 18,
l'élément électronique de données comportant un GUID ou un marqueur temporel.

20. Procédé selon une ou plusieurs des revendications 1 à 19,
les éléments électroniques de données dans le troisième état étant numérotés consécutivement.

21. Procédé selon une ou plusieurs des revendications 7 à 20,
les verrous partagés étant des verrous logiques en lecture.

22. Procédé selon l'une des revendications 1 à 21, destiné à être utilisé dans un progiciel de gestion intégrée.

23. Procédé selon l'une des revendications 1 à 7, l'élément électronique de données étant mis en oeuvre comme un ou plusieurs premiers champs et un deuxième champ d'un tableau, en conséquence de quoi le ou les premiers champs contiennent un identifiant et le deuxième champ contient des informations sur l'état de l'identifiant dans le ou les premiers champs.

24. Procédé selon l'une des revendications 1 à 7, l'élément électronique de données étant mis en oeuvre comme un ou plusieurs premiers champs d'un premier tableau et un deuxième champ d'un deuxième tableau, en conséquence de quoi le ou les premiers champs du premier tableau contiennent un identifiant et le deuxième champ du deuxième tableau contient des informations sur l'état de l'identifiant dans le ou les premiers champs du premier tableau.

25. Procédé selon l'une des revendications 1 à 7, l'élément électronique de données étant mis en oeuvre en programmation orientée objet comme une instance d'une classe.

26. Procédé selon l'une des revendications 1 à 25, un changement d'état de l'élément électronique de données du troisième état au deuxième ou au premier état étant interdit.

27. Système informatique comportant un moyen de code adapté pour réaliser chacune des étapes des procédés selon une ou plusieurs des revendications 1 à 26.

28. Programme informatique comportant un moyen de code adapté pour réaliser un procédé selon une ou plusieurs des revendications 1 à 26 lorsque ledit programme est exécuté sur un système informatique.

29. Programme informatique selon la revendication 28 concrétisé sur un support lisible par ordinateur.

30. Programme informatique selon la revendication 28 concrétisé comme signal de données informatiques.
